# EUROPEAN PATENT APPLICATION

(11) **EP 1 284 180 A1**
(43) Date of publication of application: **19.02.2003**
(21) Application number: 02255694.8
(22) Date of filing: 15.08.2002
(51) Int. Cl.: B29C 47/88, B29C 47/92

(54) **Motorised air ring**

(30) Priority: 16.08.2001 CA 2355140
(71) Applicant: Krycki, Robert D., Brampton, Ontario L6W 1E5 (CA)
(72) Inventor: Krycki, Robert D., Brampton, Ontario L6W 1E5 (CA)
(74) Representative: Hill, Richard

(57) **Abstract**

The invention relates to an air ring for a blown film process, the air ring comprising: at least one air outlet for directing a stream of air outside the film; at least one component (13) movable through a range of positions for controlling the air stream, said component being moveable to a set position within the range of positions for achieving a film of preselected properties; adjustor means (11) for moving the component (13) to any one of the positions; and output generating means for generating a unique output signal for each of said positions in said range to produce a unique signal representative of the set position. The invention also relates to methods of producing blown film. By providing output generating means to produce an output signal which identifies the positions of the components, component settings are reproducible and may be automated.

## Description

### FIELD OF THE INVENTION

The present invention relates to air rings for the production of blown polyolefin film. The invention also relates to a process for preparing such film.

### BACKGROUND OF THE INVENTION

In the production of blown polyolefin film, a source of molten plastic is fed to a circular die. The emerging molten plastic forms a continuous cylindrical film extending from the die. As the film progresses away from the die it is cooled and solidifies. After solidification the cylindrical film is collapsed into a folded tube by a collapsing frame and drawn through nip rollers. The flat tube proceeds to a secondary process and is then taken up on spools.

While the film is forming, between the die and the nip rollers, it is referred to as a bubble. After leaving the die, the film material is still molten and it expands as a result of the air pressure within the bubble. As the film progresses towards the nip rollers, it cools down and solidifies. The nip rollers are positioned so that the film is solidified when it reaches them. The point at which the film solidifies is called the frost line or material freezing line. The frost line represents a generally circumferential line around the cylinder of film, or bubble, somewhere between the die and the nip rollers. The location of the frost line varies depending on the prevailing conditions, for example, on how quickly or slowly the material cools after leaving the die.

The frost line represents the transition from a molten state of the polymer (in which the polymer may still be stretched, thus reducing thickness) to a solid state (in which the thickness of the film is effectively fixed). After the molten polymer material leaves the die, forming the bubble, the bubble expands in diameter by virtue of the pressure of the air inside the bubble. As the diameter of the bubble increases, the polymer becomes thinner until it solidifies. Thus for a constant feed of material through the die, the larger the bubble diameter, the thinner the film; conversely, the narrower the bubble, the thicker the film. Consistency of film thickness or gauge determines film quality for a given film material. Thus cooling of the emerging bubble is important in controlling the thickness or quality of the film.

Although the blown film process is an effective continuous process for preparing film, quality control depends on being able to provide consistent control of the cooling of the bubble. Such consistent control is made difficult by the sensitivity of the thin molten polymer material to changes in conditions before it reaches the frost line. Various conditions, such as the ambient air temperature, pressure and relative humidity, can affect the cooling of the bubble. Thus consistent cooling systems are needed. The film quality or gauge is also affected by various process and apparatus parameters such as the speed of the nip rollers, the extruder output and the blower delivery rate (which determines volume of air flow delivered to the air ring).

It is now standard practice in systems for the production of blown plastic film to provide an air ring immediately adjacent to the outlet of the die from which the extruded tube of molten plastic emerges. The ring delivers an annular stream of cooling air against the outside surface of the tube.

This stream of cooling air is guided around the bubble by conical collars or cones. In one type of conventional air ring there are two such cones. A first cone immediately adjacent the die serves as a forming cone and a second cone, usually of greater diameter and further from the die, serves as a bubble cone. Air streams are then directed between these cones and the emerging bubble, to affect and control the cooling of the polymer. The control of the air streams provided by an air ring is generally effected by anumber of movable components. For example, the cones themselves may be adjustable to vary the flow or direction of the air streams. The cones may have an adjustable lip. The quantity of air flowing may be adjusted and the proportions of air passing though one cone, in relation to the other cone, may be adjustable. A cone, for example the bubble cone, may have adjustable apertures to allow more air in. Any or all of such features contribute to the adjustability and control of the air streams provided by an air ring. Thus the development of such features and such adjustability has led to the development of air ring design.

Although air ring adjustment is critical to the quality and yield of the blown film process, it has not been possible to automate it with satisfactory results. Typically, therefore, air ring adjustment is performed by skilled operators, and although attempts have been made to record component settings, currently, adjustment tends to be affected according to the experience of the operator in response to observation of the bubble shape. Such a person becomes familiar with the air ring and learns to make appropriate adjustments to obtain the required film thickness or gauge of acceptable quality. Since the film gauge usually varies in response to changes in the ambient conditions in the environment around the bubble, such as air temperature, pressure and humidity, and since such environmental conditions may change during the day, the operator must be constantly checking the process and making appropriate adjustments. Production results can therefore vary from batch to batch. However there may be some predictability in the nature of the environmental changes. For example, the air temperature may rise predictably each day as the day progresses. It would therefore be advantageous to have a system which could accommodate such changes, with some degree of automation, without reliance on the skill of an operator. However, although it would be desirable to improve automation of the adjustment and reduce dependence on the operator, such automation has proved an elusive goal.

There have been various attempts to provide automation. For example, U. S. Patent No. 5,676,893 (issued Oct 14,1997, inventor- Robert Cree, assigned to Addex Design, Inc.) describes a design which includes a device for continuously measuring the thickness of the bubble all around the circumference of the film. These measurements are used to make continuous adjustment to a number of air baffles, each of which controls a portion of the air stream cooling the bubble at a particular corresponding portion of the circumference of the bubble. However, although the baffles are moved in response to the thickness measurement, their position is not recorded and there is no signal generated to indicate their position. Such a design is complex and expensive.

Until now, none of the various attempts to automate air ring adjustment have been entirely satisfactory. It would therefore be desirable to provide an air ring capable of consistent repeatable results, and which can provide automated air ring adjustment to reduce or eliminate dependence on an operator.

### SUMMARY OF THE INVENTION

According to one aspect of the present invention there is provided an air ring for a blown film process, the air ring comprising: at least one air outlet for directing a stream of air outside the film; at least one component movable through a range of positions for controlling the air stream, said component being moveable to a set position within the range of positions for achieving a film of preselected properties; adjustor means for moving the component to any one of the positions; and output generating means for generating a unique output signal for each of said positions in said range to produce a unique signal representative of the set position.

According to a further aspect of the present invention there is provided in an air ring to provide at least one air stream outside a bubble in a blown film process, the air ring comprising a plurality of components at least one component adjustable to modify at least one air stream, wherein the components include an upper lip and a lower lip, a forming cone, and abubble cone; the improvement comprising providing an output generating means to generate an output signal to identify the position of said at least one adjustable component.

According to another aspect of the present invention there is provided a method of preparing a blown plastic film which comprises: extruding melted plastic through a circular die; continuously removing the melted plastic from the die in the form of a cylindrical plastic film; providing an air flow around the outside of the film by means of an air ring adjusting at least one component of the air ring to modify the air flow; recording, in a processing unit, a signal generated by an output generating means, which signal identifies a unique position of said at least one component.

According to a still further aspect of the present invention there is provided a process for the continuous production of a blown plastic film using an apparatus which comprises an air ring which provides an air flow to cool the plastic film, the air ring having at least one component movable to control the air flow, the component movable in response to a set of external conditions affecting the quality of the film, the method comprising: making at least one adjustment to said at least one movable component of the air ring to obtain a pre-selected film quality corresponding to a first set of said external conditions; recording in a processing unit a first output signal generated by an output generating means to identify a first position of said at least one movable component corresponding to said first set of conditions; adjusting said at least one movable component in response to a second set of said external conditions to obtain said pre-selected film quality; recording in the processing unit a second output signal generated by the output generating means to identify a second position of said at least one movable component corresponding to said second set of conditions; calculating, based on said first and second output signals, an appropriate adjustment for said at least one movable component in response to a third set of said external conditions, making said appropriate adjustment to said at least one movable component.

According to another aspect of the present invention there is provided a method of preparing a blown film of a preselected quality comprising: observing a first change in an environmental condition affecting the film quality; adjusting a movable component of an air ring to change an air flow from the air ring to restore the preselected film quality; recording an output signal generated by an output generating means, the signal identifying the position of the component corresponding to the adjustment; repeating said adjusting and recording in response to subsequent changes in said environmental condition to obtain a database of output signal values corresponding to unique positions of the movable component.

The air ring has at least one movable component. Preferably the air ring has a plurality of movable components. These components are movable to affect the quality of the finished film. Generally the components are movable to affect and control the air streams provided by the air ring. The nature of the movable components will depend upon the type or design of the particular air ring used.

In an air ring with both a forming cone and a bubble cone, examples of such movable components include: a component to operate a valve to control air flow to the forming cone; an upper lip component movable vertically (up or down) when the air ring is oriented to form the bubble upwardly away from the die, so that movement of the upper lip affects the flow of air in a stream flowing towards the center of the air ring and then also affects the air stream flowing between the bubble cone and the forming cone; the bubble cone component itself, which may be mounted on the upper lip and movable (for example, vertically) independently and in relation to the upper lip so that the quantity of air in the air stream between the bubble cone and the forming cone, and the shape or direction of that air stream can be controlled; a movable component to open and close a plurality of apertures in the bubble cone (since the bubble cone in such air rings extends above the general plane of the air ring, such apertures allow ambient air to be drawn into the air stream exiting from the air ring and thus increase the flow). The movement of such components may affect the quantity or volume of air in the air stream and the velocity of the air stream or it may affect the shape or direction of the stream. It may also affect whether there is turbulence in the air stream. The greater and more varied the control of the air stream, the more options are available to control the cooling of the film emerging from the die and thus the quality of the finished film.

The movable components are movable through a range of positions. The range of positions may be continuous to form a continuum of positions or each position may be one of a series of discrete steps. In some cases the range of positions may vary from a maximum position at one end of the range to a minimum position at the other end of the range. However, the range may also be circular so that the component moves from a starting position through the range to return to the starting position. The components may move in a variety of ways, but regardless of how they move, each position in the range represents a set position, or a setting of that component. The components are movable by adjustor means or actuators which may be, for example, an electric motor such as a stepper motor or the adjustor means may be fluidic, hydraulic, electronic, mechanical or any other means to generate or create the desired movement of the component.

Associated with at least one of the movable components there is an output generating means to generate an output signal. Preferably there is at least one output generating means associated with each movable component. The purpose of the output signal is to identify the position of the component with which the signal is associated. It is not necessary to know the absolute position of the component. It is only necessary to be able to identify its position, so that the component may be returned to the same position on another occasion. For example, if the component is moved vertically by rotating a threaded bolt, it would not be necessary to know the distance moved by the component, it would only be necessary to know the number of turns of the threaded bolt from some reference position in order to identify the position of the component. Thus the position of the component may be identified either directly or indirectly.

The output generating means may include a means to detect the position of the movable component either directly or indirectly, such as a sensor. The corresponding signal, which identifies a unique position of the component, may then be generated.

If the component is moved by an actuator, the output generating means could be in the actuator itself (built-in) or outside the actuator (external) mounted in any place where a relative movement reading can be made.

The output generating means may be combined with the adjustor means in a single unit. For example, it is now possible to obtain actuators (which may be motorized) with built-in encoders or potentiometers. The encoders, which may be linear or rotary, can show a unique value in a range of 1 to 100 (for example) for each position of the associated actuator, thus identifying its position. Encoders generally use TTL 5 volt signal pulses to identify the value in the range. Encoders generate digital signals. Potentiometers, on the other hand, generate analog signals according to an increase or decrease in the value of an electrical parameter such as current or voltage- The output generating means can thus include a counter of some kind, for example to count the number of steps made by a stepper motor, which then generates a signal indicating the count made. It can also include a recording device which can read a position such as a laser position sensor or optical sensor.

The type of output generating means will be governed in part by the type of signal to be generated. Thus an electrical signal can be generated, for example, by a linear or rotary potentiometer. Other suitable output generating means include encoders (linear or rotary), optical devices, slides and numbered rules. The position of the component might also be uniquely indicated by a combination of more than one signal, for example from more than one output generating device.

In order to achieve reproducibility, the signal should be unique for any particular position of the component. Thus each position in the range should be identifiable by a unique signal. Any kind of signal which can uniquely indicate the position of the component may be used. The signal is a means to transfer information. Suitable signals include visual, optical, electrical and magnetic signals. Signals may also be analog or digital. A preferred signal is an electronic signal or a signal which can be directly processed by a processor such as a computer. Suitable processors include laptop, desktop and industrial computers.

In a preferred embodiment, the signal is sent to a processor where it can be stored. In this way, signal readings can be taken corresponding to environmental factors such as the air temperature and humidity. Then, on another occasion when the environmental factors are the same or similar, the components can be moved to the positions they were in on the previous occasion. Similarly, signal readings can be taken corresponding to particular process and apparatus parameters or combinations of environmental conditions and process and apparatus parameters. Thus by providing signals to identify the positions of the components, it becomes possible to reproduce a successful combination of component settings automatically. Also, if the environmental factors are recorded, together with the component settings, a database can be compiled. The processor can then be programmed to predict a suitable combination of component settings for a variety of different environmental and process conditions.

In this type of embodiment, it would also be preferred that the movement or adjustment of the components can be effected by the processor. For example, if the adjuster means is motorized, the processor can instruct the motor to move the component to a selected position or setting. In this way, adjustment can be automated.

Thus the provision of an output generating means which can produce a signal to identify the position of the component, enables reproducibility of the component settings and automation of adjustment.

### BRIEF DESCRIPTION OF THE DRAWINGS

Embodiments of the present invention will now be described, by way of example, with reference to the attached Figures, in which:
Figure 1 is a cross-sectional view of an embodiment of an air ring according to the present invention;
Figure 2 is an orthogonal view of a cross-sectioned air ring according to an embodiment of the present invention; and,
Figures 3A and 3B show schematic representations of two kinds of actuator suitable for use with an air ring of the invention;
Figure 4 is a plan view of an air ring of the invention, showing various actuators.

### DETAILED DESCRIPTION

A motorized air ring system for producing consistent high quality blown film is disclosed. More specifically, the individual adjustable component parts of an air ring, which are normally adjusted manually are motorized. The controls will include an electrical/mechanical device designed to feedback and display, for the benefit ofthe operator, the location of the components at any given time relative to a set of standards or reference points. The motorization of the individual adjustable component parts of the air ring yields consistent repeatable results for producing consistent high quality blown film with minimum training for the machine operator. As a result, the producer attains improved manufacturing costs.

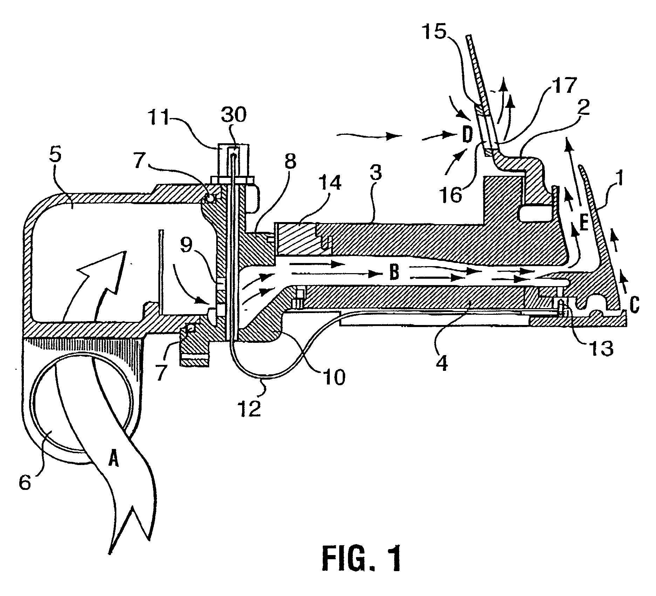

As shown schematically in Fig. 1 a preferred air ring assembly comprises a forming cone 1, a bubble cone 2, an upper lip 3, a bottom lip 4 and an air chamber 5.

As the molten plastic emerges from the circular die (not shown) it forms a cylindrical film referred to as the bubble. The forming cone 1, upper lip 3 and bubble cone 2 guide air streams around the outside of the bubble as it leaves the die.

Air is provided to the air ring from a distribution manifold (not shown) by way of a series of flexible hoses. Such hoses are suitably about four inches in diameter. The hoses are attached to the air ring assembly at air entry ports shown as port 6. The direction of the air flow is shown by arrow A. Port 6 is connected to a plenum or chamber 5. The number of entries and their shape will vary in size relative to the size of the machine itself. Chamber 5 provides amixing and blending area which reunites the air from the multiple hose supply into a single chamber. The chamber 5 itself is a cylindrical shape which accepts the tangential entry of the air stream, and acts as a reservoir to reduce pulsation within the hoses Seals 7 allow the chamber 5 to move independently from the rest ofthe air ring. In many air rings the chamber 5 with hoses attached forms a sub-assembly which remains stationary while the rest of the air ring assembly is able to rotate. A fixed upper lip 8 has a series of holes 9 engineered to rectify the air flow by changing the tangential airflow into a flow pattern directed straight toward the centre of the assembly where it will exit. The fixed upper lip 8 is attached to fixed lower lip 10, which provides a foundation or primary support for the assembly. The bottom lip 4, attaches on the lower side to the fixed lower lip 10. Thus a primary air flow (shown by arrows B) is created between the bottom of upper lip 3 and the top of lower lip 4. A motor unit 11 having member 30 controls a secondary air flow through the bottom lip 4 by means of a cable 12 and an air control valve 13. The secondary air flow then passes between the inside face of forming cone 1 and the emerging bubble, as shown by arrows C. Thus the motor unit 11 provides ameans to control the secondary air flow. In the embodiment shown, the forming cone 1 is fixed to bottom lip 4. However, in other embodiments, forming cone 1 may be removable or adjustable. A number of holes may be positioned around the diameter of the larger area of the forming cone to permit air to pass through to the exit. In the embodiment shown, the secondary air flow is controlled by valve 13 which in turn is controlled by motor unit 11 via cable 12, but any other suitable means may be used to control the secondary air flow. In the embodiment shown, motor unit 11 has a built-in output generating means (not shown) to provide an output signal to uniquely identify the position of valve 13. Thus motor unit 11 serves as both the adjustor means, or actuator, to move valve 13 and also an output generating means to generate a suitable output signal. An adjusting nut 14 is mounted on the upper lip 3 and connects upper lip 3 to fixed upper lip 8. Adjusting nut 14 allows upper lip 3 to move vertically relative to a horizontal plane with the adjusting nut 14 being the fixed mechanism to locate parts 3, and 2, and keep them concentric. The upper lip 3, is allowed to move either up or down in relation to fixed upper lip 8 and therefore develop changes to aerodynamic effect which may be used for gauging of the blown film. The bubble cone 2 provides a collar to guide the air flow around the expanding bubble and thus help to increase control of the film. Bubble cone 2 is adjustable up and down. A gate 15 is mounted on the bubble cone 2 Both the gate 15 and the bubble cone 2 have a series of holes 16,17 that match each other. By rotating the gate 15 the holes 16, 17 can be shut off completely, or proportionally opened. In this way, additional outside air (shown by arrows D) can be allowed to join the main airflow around the bubble since when holes 16, 17 are opened, the reduced pressure caused by the primary air flow will draw in additional air. The location of the bubble cone 2 moving up or down in relation to upper lip 3 can be used to develop a venturi effect as an additional adjustment of the airstream and thus a further control of the gauge and quality of the film. Thus the movable components shown in figure 1 are the valve 13, upper lip 3, bubble cone 2 and gate 15.

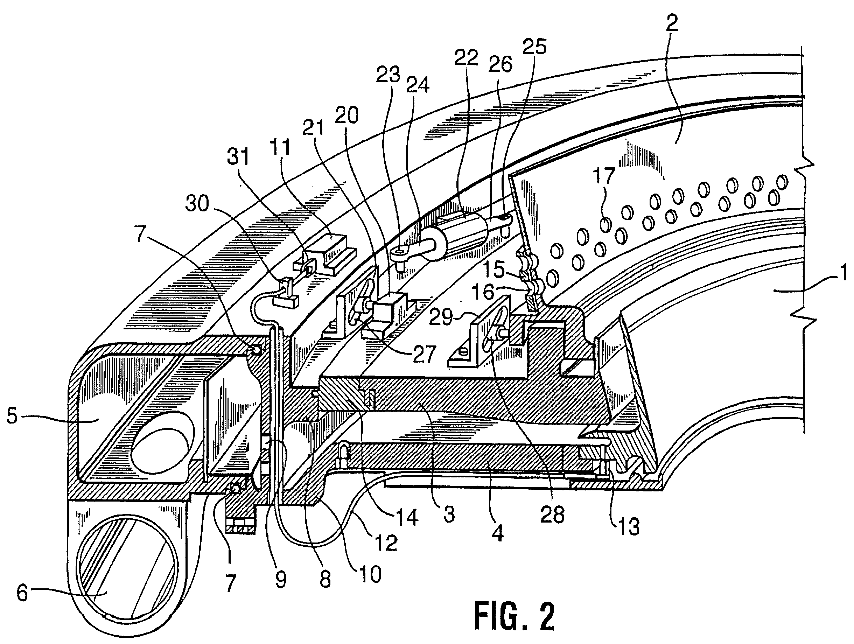

Preferably the air ring of the invention is motorized. That is, for those parts which are adjustable to control the air flow they are moved by way of a motor so that manual adjustment is not required and so that movement of the parts can be automated. Figure 2 shows one embodiment of a motorized upper lip 3. The motorized air ring of Figure 2 includes a cam unit 20 coupled to a ramp 21 adapted to communicate with the cam unit 20, and an upper lip actuator 22. The actuator 22 is mounted at one end 23 of arm 24 to the fixed upper lip 8, and at the other end 25 of arm 26 to upper lip 3. Thus extension or retraction of arms 24 and 25 causes rotation of upper lip 3 which rotation is given a vertical component by the movement of cam unit 20 in the diagonal slot 27 in ramp 21. Valve 13 is operated by motor unit 11 by way of cable 12 which is held in position by member 30 and extended or retracted by arm 31. Bubble cone gate 15 has a pattern of holes 16 matching the holes 17 in bubble cone 2. A second actuator (not shown), similar to actuator 22, is positioned to move the bubble cone gate 15 so that the holes 16 can be completely in line with the holes 17 so that air can flow from outside the bubble cone into the air stream around the bubble from the air ring or the holes 16 can be moved so that no air can pass through. The bubble cone 2 can also be adjusted up and down in relation to the upper lip 3 by means of another actuator (not shown) in combination with the cam unit 28 movable in ramp 29 in the same manner that actuator 22 moves upper lip 3 up and down by means of the movement of cam unit 20 in ramp 21. It should be clear to a person skilled in the art that other possibilities may be substituted for the actuator, cams and ramps shown in order to move the components in the desired fashion. In the embodiment shown the output generating means would be built-in to the actuators, for example actuator 22, to generate the output signal to identify the position of the movable components. However, it will be readily apparent that the output generating means could be in the cam units or ramps, for example cam unit 20 or ramp 21.

In operation, air enters port 6 (as shown by arrow A) and then chamber 5. It then passes through the rectifying holes 9 into the passageway formed between upper lip 3 and bottom lip 4 (shown by arrows B). The flow of air in this passageway is generally toward the centre of the air ring. When the air flow has almost reached the end of the bottom lip 4 it is split into two paths. One path flows through valve 13 towards the die (not shown) located around the central axis of the air ring. This air path then flows upwards in the passage formed by the inside surface of forming cone 1 and the outside surface of the bubble exiting from the die(as shown by arrows C) The other air path continues past the end of upper lip 3 and flows upwards in the passage formed firstly by the outside surface of forming cone 1 and the upward curved surface of upper lip 3 (as shown by arrows E). Then this passage becomes the passage formed between the inside surface of the bubble cone 2 and the outside surface of the exiting bubble. Since gate 15 has openings 16 which match openings 17 in bubble cone 2, movement of gate 15 can cause the openings 16 and 17 to have various degrees of alignment from a position in which none of the holes are in line to a position in which all the holes are in line and air from the outside of the air ring may pass through the holes 16 and 17 (shown by arrows D) and increase the air flow in this air passage between the bubble cone 2 and the exiting bubble. Thus it can be seen that the air flow is affected by movement of any of the movable components; bubble cone 2; upper lip 3; valve 13; and gate 15.

In the air ring of the invention an output generating means is provided for at least one of the movable components which affects the film quality. Preferably an output generating means is provided for all the adjustable components. The components which are movable or adjustable are movable through a range of unique positions. The output generating means generates an output signal which identifies a unique position of the adjustable component so that the component can be automatically returned to that position.

It is also possible to have more than one output generating means for each component.

Since it is an object of the invention to provide reproducibility, it is preferred that the movable components are motorized or provided with some other equivalent means which is capable of remote and automatic movement. In this way the output signal generated by any output generating means can be recorded and an automated control can move the component to a previous or similar position as desired.

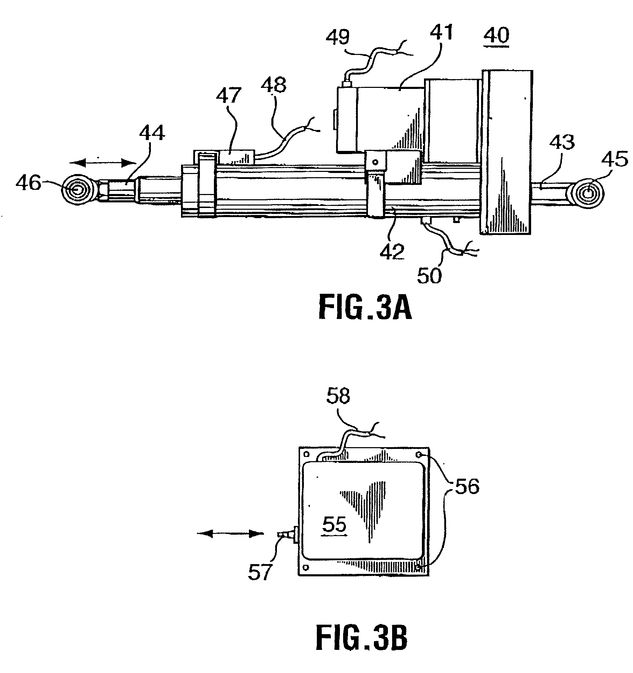

Figures 3A and 3B show two kinds of actuator suitable for use with air rings of the invention. In figure 3A an actuator or adjustor means is generally indicated as 40. The actuator is operated by a motor 41 mounted on a cylinder 42 from which protrude arms 43 and 44 which have ends 45 and 46 which may be secured to components of the air ring. An end stroke limit switch 47 may be used to control the range of extension of arms 43 and 44 by cutting off the power at a pre-selected point. Wiring 48 and 49 is used to supply power to the switch 47 and motor 41 respectively. The output generating means (not shown) is built into the actuator 40. The output signal generated by the output generating means, may be transmitted through wiring 50. A suitable output generating means in such an actuator would be a potentiometer, for example. Such actuators, with built-in output generating means, are readily available commercially.

Figure 3B shows a smaller version of a suitable adjustor means or actuator generally indicated as 55. Bolt boles 56 accommodate the mounting of the actuator 55 on a component of the air ring. A movable arm 57 transmits movement (rotary or extension) from a motor (not shown) inside the actuator 55. Again, the output generating means in such an actuator can be built-in and might suitably be a potentiometer. The output signal can be transmitted by wiring 58.

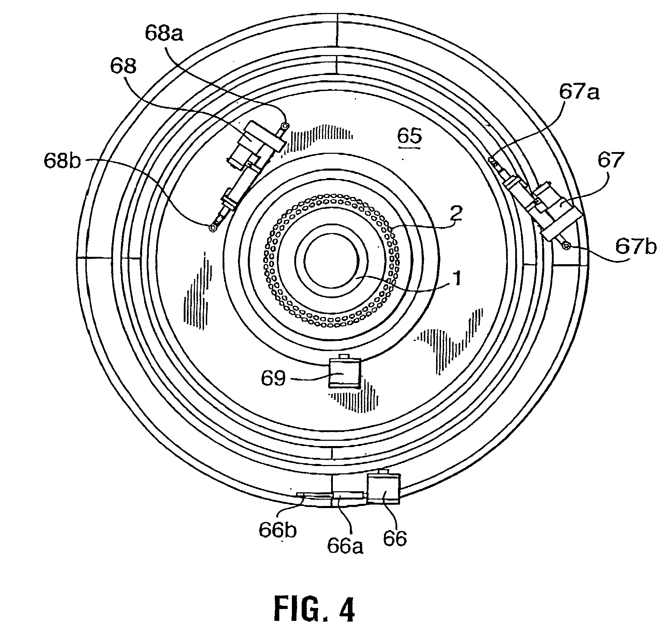

Figure 4 is a schematic plan view of an air ring (generally indicated as 65) according to the invention with the cover removed to reveal one possible arrangement of actuators. The figure is only intended to illustrate apossible arrangement and so some components have been omitted for simplicity. Thus various components needed to connect the actuators to the components which they control are not shown. The precise nature of such components should be readily apparent to a person skilled in the art. A first actuator 66 controls movement of valve 13 (not shown) by means of a shield cable connection symbolically represented by 66a and 66b. Thus actuator 66 controls a secondary air flow to the forming cone 1. A second actuator 67 controls movement of the upper lip 3 (not shown) Actuator 67 is mounted so that end 67b is connected to fixed upper lip 8 (not shown) and the other end 67a is connected to movable upper lip 3 (not shown). Thus extension and retraction of ends 67a or 67b will effect a movement of the upper lip 3 in relation to the position of fixed upper lip 8. A third actuator 68 is connected to the bubble cone 2 through end 68b and to the upper lip 3 (not shown) through end 68a. In such an embodiment, actuator 68 is mounted on upper lip 3 and thus moves with it. This facilitates controlling the bubble cone 2 to move either simultaneously with movement of upper lip 3 or independently of upper lip 3. A fourth actuator 69 controls movement of the bubble gate 15 (not shown). In one embodiment, actuator 69 is mounted on the bubble cone 2 with an actuatable connection to bubble gate 15 so that gate 15 can be moved independently of bubble cone 2. Each of these actuators or adjustor means would suitably have a built-in output generating means to provide output signals which uniquely identify the location of the movable components with which they are associated.

It is also possible to convert a conventional air ring to an air ring according to the invention by providing output generating means and preferably motorizing the movable components. In some air rings, such a conversion would not require a redesign but only a retro-fitting.

For example, some conventional air rings have a thread between the adjusting nut 14 and the fixed upper lip 8 which enables movement of the upper lip 3. A preferred adaptation of such an arrangement would be to replace the thread by a smooth machined surface. As shown in Figure 2, the upper lip 3 would preferably be provided with an actuator 22 (also attached to fixed upper lip 8) and a cam unit 20. A ramp 21 would be provided on fixed upper lip 8 to cooperate with cam unit 20. Thus a change in length of actuator 22, as shown in Figure 2, would result in a rotation of fixed upper lip 3. By virtue of the angle of the slot in ramp 21 cooperating with the cam unit 20, any rotation of fixed upper lip 3 will result in a change of height in relation to the fixed lower lip 10.

A similar arrangement can be used for other movable components. For example, adjustment of the valve 13 can be motorized by providing a direct moving mechanism to pull or push the cable 12 to change the air flow to the forming cone 1 by adjusting the valve 13.

The bubble cone gate 15, which moves holes 16 into and out of alignment with holes 17 in bubble cone 2, can also be motorized. An actuator (not shown) may be mounted to move bubble cone gate 15 in slidable relation to bubble cone 2 to modify air flow between the bubble cone 2 and the bubble.

The angle of ramps 29 and 21 can be selected based on the degree of sensitivity of adjustment that is desired. All the actuators, ramps and cams for adjusting the air ring components are part of the air ring positioning means for altering the flow of air through the air ring as the components are shifted in position relative to each other.

In a preferred embodiment of the present invention, all actuators will feed a signal to the control box indicating the part position. Therefore the settings become repeatable and all the moving parts are adjusted relative to a desired physical point. Those of skill in the art will understand, for example, that the position of cam unit 20 and ramp 21 can be exchanged without affecting the operation of the invention.

In operation, when the upper lip 3 is rotated with respect to the fixed upper lip 8, a change in height will develop between them because the cam 20 moves either up or down the ramp 21. A change in height will also develop between bubble cone 2 and bubble cone gate 15 when its actuator (not shown) rotates cone 2 with respect to gate 15.

Although actuators such as upper lip actuator 22 is used to rotate the upper lip 3 relative to fixed upper lip 8, any means for moving the upper lip 3 relative to fixed upper lip 8 can be used. For example, cam unit 20 can be a motor driving a toothed wheel, and the ramp 21 can have complementary teeth in engagement with the toothed wheel. Additionally, the motorized air ring can be part of a system in which it is possible for the operator to recall specific adjustment settings for the air ring used in previous production, to enable duplication of finished product end results. Furthermore, all the actuators can be electronically controlled as a system by a computer.

Therefore the motorized air ring according to the embodiments of the present invention can overcome difficulties in resetting the individual component parts relative to a physical position. It can deliver position repeatability, favourably affecting the production process and reducing uncertainty around positioning of the individual parts thus aiding the process of producing consistent high quality blown film with a minimum of training for the machine operator.

The foregoing has constituted a description of specific embodiments showing how the invention may be applied and put into use. These embodiments are only exemplary. The invention in its broadest, and more specific aspects, is further described and defined in the claims which now follow.

These claims, and the language used therein, are to be understood in terms of the variants of the invention which have been described. They are not to be restricted to such variants, but are to be read as covering the full scope ofthe invention as is implicit within the invention and the disclosure that has been provided herein as follows:

## Claims

1. An air ring for a blown film process, the air ring comprising:
at least one air outlet for directing a stream of air outside the film;
at least one component movable through a range of positions for controlling the air stream, said component being moveable to a set position within the range of positions for achieving a film of preselected properties;
adjustor means for moving the component to any one of the positions; and
output generating means for generating a unique output signal for each of said positions in said range to produce a unique signal representative of the set position.

2. An air ring according to claim 1 wherein said at least one component is movable by means of an electric motor.

3. An air ring according to claim 1 wherein said at least one component comprises:
an upper lip movable in relation to a fixed lower II;
a bubble cone to direct an air stream around the blown film wherein the bubble cone is movable in relation to the upper lip; and
means to open and close a plurality of apertures in the bubble cone to admit additional air into the air stream.

4. An air ring according to claim 1 wherein the air ring comprises at least two air outlets, a first outlet to direct a first air stream toward molten plastic exiting a film die to form the blown film and a second outlet to direct a second stream around the outside of the film bubble wherein the first outlet comprises an adjustable valve to control the first air stream.

5. An air ring according to claim 3 wherein each said movable component has at least one said adjustor means and wherein each adjustor means is motorized.

6. An air ring according to claim 4 wherein said valve has at least one said adjustor means and wherein each adjustor means is motorized.

7. An air ring according to claim 5 wherein each said adjustor means has a corresponding output generating means and wherein the output signal of each said output generating means is an electronic signal.

8. An air ring according to claim 6 wherein each said adjustor means has a corresponding output generating means and wherein the output signal of each said output generating means is an electronic signal.

9. An air ring according to claim 1 further comprising a processing unit to receive and record a signal from the set position.

10. An air ring according to claim 7 further comprising a processing unit to receive and record the electronic signal from a set position and to instruct each said adjustor means to move each said movable component to a selected position.

11. An air ring according to claim 8 further comprising a processing unit to receive and record the electronic signal from a set position and to instruct each said adjustor means to move each said movable component to a selected position.

12. An air ring according to claim 5 wherein each said adjustor means is motorized by a step motor and said range is a range of stepwise discrete positions.

13. An air ring according to claim 6 wherein each said adjustor means is motorized by a stepper motor and said range is a range of stepwise discrete positions.

14. In an air ring to provide at least one air stream outside a bubble in a blown film process, the air ring comprising a plurality of components at least one component
adjustable to modify at least one air stream, wherein the components include an upper lip and a lower lip, a forming cone, and a bubble cone; the improvement comprising providing an output generating means to generate an output signal to identify the position of said at least one adjustable component.

15. A method of preparing a blown plastic film which comprises:
extruding melted plastic through a circular die;
continuously removing the melted plastic from the die in the form of a cylindrical plastic film;
providing an air flow around the outside of the film by means of an air ring
adjusting at least one component of the air ring to modify the air flow,
recording, in a processing unit, a signal generated by an output generating means, which signal identifies a unique position of said at least one component.

16. A process for the continuous production of a blown plastic film using an apparatus which comprises an air ring which provides an air flow to cool the plastic film, the air ring having at least one component movable to control the air flow, the component movable in response to a set of extemal conditions affecting the quality of the film, the method comprising:
making at least one adjustment to said at least one movable component of the air ring to obtain a pre-selected film quality corresponding to a first set of said external conditions;
recording in a processing unit a first output signal generated by an output generating means to identify a first position of said at least one movable component corresponding to said first set of conditions;
adjusting said at least one movable component in response to a second set of said external conditions to obtain said pre-selected film quality;
recording in the processing unit a second output signal generated by the output generating means to identify a second position of said at least one movable component corresponding to said second set of conditions;
calculating, based on said first and second output signals, an appropriate adjustment for said at least one movable component in response to a third set of said external conditions,
making said appropriate adjustment to said at least one movable component.

17. A method of preparing a blown film of a preselected quality comprising:
observing a first change in an environmental condition affecting the film quality;
adjusting a movable component of an air ring to change an air flow from the air ring to restore the preselected film quality;
recording an output signal generated by an output generating means, the signal identifying the position of the component corresponding to the adjustment;
repeating said adjusting and recording in response to subsequent changes in said environmental condition to obtain a database of output signal values corresponding to unique positions of the movable component.

18. A method according to claim 17 further comprising
observing an additional change in said environmental condition;
comparing said additional change with said database;
selecting an output signal value corresponding to said additional change;
adjusting said movable component to correspond with said selected output signal value.
